# EUROPEAN PATENT SPECIFICATION

(11) **EP 1 754 744 B1**
(45) Date of publication and mention of the grant of the patent: **07.05.2008**
(21) Application number: 05018069.4
(22) Date of filing: 19.08.2005
(51) Int. Cl.: C08J 9/00, C08J 9/04, C08J 9/06, C08J 9/12, C08J 3/20, C08L 23/02, C08L 23/04, C08L 23/10, C08J 5/18

(54) **A polyolefin foam**
Polyolefin-Schaum
Mousse à polyoléfine

(43) Date of publication of application: 21.02.2007
(73) Proprietor: Borealis Technology Oy, 06101 Porvoo (FI)
(72) Inventor: Manfred Stadlbauer, 4040 Linz (AT); Manfred Kirchberger, 4731 Prambachkirchen (AT)
(74) Representative: Kador & Partner

(56) References cited:
- US-A- 5 286 428
- PATENT ABSTRACTS OF JAPAN vol. 2003, no. 12, 5 December 2003 (2003-12-05) & JP 2004 323623 A (KANEGAFUCHI CHEM IND CO LTD), 18 November 2004 (2004-11-18)
- PATENT ABSTRACTS OF JAPAN vol. 010, no. 191 (M-495), 4 July 1986 (1986-07-04) & JP 61 035919 A (NIPPON RADIATOR CO LTD), 20 February 1986 (1986-02-20)
- PATENT ABSTRACTS OF JAPAN vol. 2003, no. 12, 5 December 2003 (2003-12-05) & JP 2004 330464 A (KANEGAFUCHI CHEM IND CO LTD), 25 November 2004 (2004-11-25)

## Description

The invention relates to a polyolefin foam which absorbs liquid, a process for making the foam and uses of the foam.

Polyolefin foams, in particular foams of high melt strength (HMS) polypropylene are well known. US 2003/0232210 A1 discloses a high melt strength, biaxially oriented polypropylene foam layer which has an ink-receptive surface due to a corona/flame treatment or by coating an ink-receptive layer of an inherently water-absorbing polymer to the foam layer. To enhance the smoothness of the ink-receptive surface particulate additives are added.

It is also known to add small amounts of particulate solid materials to the polymer gel prior to foaming, wherein the particulate solid materials act as seeds to promote the formation of the cells. For instance, up to 5 wt% of such a particulate solid material are used for this purpose according to WO 00/15700 to make an acoustical open-cell high melt strength polypropylene foam.

Furthermore, small amounts of talc are added as nucleating agent when polymers are blended in an extruder. For instance, 2 wt% of talc are used for this purpose according to WO 2004/104075 A1 to make a high melt strength polypropylene foam in an extruder.

It is an object of the invention to provide a polyolefin foam which is capable to absorb high amounts of liquid.

This object is attained with a polyolefin foam comprising 30 to 94 wt% of a foamable polyolefin and 6 to 70 wt% of a particulate solid material.

Preferably, the amount of particulate solid material is at least 10 wt%, more preferably more than 20 wt%, and most preferably more than 40 wt%.

Surprisingly, due to this high amount of particulate solid material the polyolefin foam is capable to absorb high amounts of liquid. It is assumed, that the particulate solid material causes the formation of micro holes in the cell walls of the foam so that the foam's voids are capable to absorb liquid.

It has been found that particles of a size in the order of the final thickness of the foam's cell walls show the favourable effect. The thickness of the cell walls depends on the size distribution of foam cells and the density of the foam and may vary from the nano- to the micrometer scale.

Accordingly, the polyolefin foam of the invention is preferably used for articles absorbing liquid. An application of the polyolefin foam of the invention is for instance food packaging, in particular trays for food packages to absorb liquid emitted from the food, e.g. of packed meat, can be made of the foam. Another application are ink pads.

However, there are numerous other applications of the foam of the present invention due to its unique structure. For instance, permeable films and the like may be made of the foam of the present invention, such as breathable films e.g. for making diapers and the like hygienic products. Another application of the foam are battery separators. It may also be used, for instance, in structural engineering. In addition, beads or the like of the foam according to the invention can be used in environmental protection to remove oil-spills. The foam is also useful as acoustic insulation for instance in automotive applications.

The foamable polyolefin includes, for example, polypropylene, low density polyethylene, linear low-density polyethylene, very low-density polyethylene, medium density polyethylene, high density polyethylene, polybutene or polyolefin copolymers such as ethylene/propylene copolymer and blends thereof.

Preferably high melt strength polyolefins having a long-chain branched structure are used. In particular foamable polyolefins having a weight average branching index g' of less than 0.9, in particular less than 0.85 most preferably between 0.50 and 0.80 are used.

Preferably, the high melt strength polyolefin is polypropylene. The foamable polypropylene may be comprised solely of propylene homopolymer or may comprise a copolymer having 50 wt% or more propylene monomer content. Further, foamable propylene may comprise a mixture or blend of propylene homopolymers or copolymers with a homo- or copolymer other than propylene homo- or copolymers.

Particluarly useful propylene copolymers are those of propylene and one or more non-propylenic monomers. Propylene copolymers include random, block, and grafted copolymers of propylene and olefin monomers selected from the group consisting of ethylene, alpha-olefins with 3 to 8 carbon atoms and dienes with 4 to 10 carbon atoms.

The particulate solid material has preferably an average particle size of 0.1 µm to 200 µm, in particular 1 µm to 50 µm. Any particular solid material may be used, such as chalk, talc, silica etc. Preferably, talc is used.

The liquid absorption capacity of the polyolefin foam of the present invention is preferably more than 5% (g/g) more preferably 10% (g/g) or more.

The polyolefin foam of the present invention has preferably a density of 20 to 700 kg/m³, depending in particular on the amount of blowing agent applied, in particular 200 to 600 kg/m³.

As blowing agent physical or chemical blowing agents may be used. Physical blowing agents are for instance nitrogen, oxygen, carbon dioxide or low hydrocarbons, as isobutane, or argon, helium or water. Chemical blowing agents include azo-carbonate-and hydrazide-based compounds, including azodicarbonamide, azodiisobutyro-nitrile, benzenesulphonehydrazide, 4,4-oxybenzene sulfonylsemicarbazide, XXX and the like. Chemical blowing agents typically decompose at a temperature of 140 °C or above.

The high melt strength polypropylene used preferably according to the present invention is commercially available for instance from Basel (tradename Profax PF 814) and Borealis (tradename Daploy WB 130 HMS).

Foamable high melt strength (HMS) polypropylene may be prepared according to patent EP0879830 which is hereby incorporated by reference.

The polyolefin foam of the present invention may further comprise conventional additives and/or stabilizers, such as anti-oxidants, stablilizers, acid scavengers, clarifying agents, colouring agents, anti-UV-agents, antistatic agents, slip/mold-release agents, flame retardants, etc.

Typically, these additives may be present at less than 5 wt% each, more preferably less than 3 wt% relative to the total weight of the composition.

Further additives are β-nucleating agent in an amount of up to 2 wt%. As β-nucleating agent γ-quinacridone or any other β-nucleating agent can be used.

The process for making the polyolefin foam of the present invention comprises preferably the steps of
- preparing a mixture of the foamable polyolefin and the particulate solid material by melt-mixing the polyolefin and the particulate solid material through compounding, and
- adding a blowing agent to the mixture of the polyolefin and the particulate solid material to foam the mixture.

Compounding processes to prepare the mixture of particulate solid material with the polymer are state of the art and described, for example, in M. Rusu et al. "Technological Aspects of Additvies Use for Thermoplastic and Elastomeric Polyolefins" in C. Vasile (edt.) Handbook of Polyolefins, 2nd edition, Dekker (2000).

The melt mixed mixture of the polyolefin and the particulate solid material has preferably one or more of the following properties:
melt strength 5 to 100 cN,
melt drawability 100 to 500 mm/s,
tensile modulus 100 to 10000 MPa.

Foaming processes can use chemical and/or physical foaming agents. Appropriate foaming lines are state of the art and described, for example, in S.-T. Lee (edt.), Foam Extrusion Principles and Practice, CRC Press (2000).

In view of the unique properties of the foam of the invention, it is assumed that the particulate solid material creates micro-holes in the cell walls during the bidirectional extensional flow of the polymer for the moment of cell expansion.

### Description of measurement methods

The amount of branching is determined using the weight average branching index g' of the branched polyolefin. The weight average branching index g' is defined as g' = [IV]_{br}/[IV]ₗᵢₙ|_{Mw} in which g' is the weight average branching index, [IV]_{br} is the intrinsic viscosity of the branched polyolefin and [IV]ₗᵢₙ is the intrinsic viscosity of the linear polyolefin having the same weight average molecular weight as the branched polyolefin. It is well known in the art that as the g' value decreases, branching increases. See B.H. Zimm and W.H. Stockmayer, J. Chem. Phys. 17, 1301 (1949).

The melt strength in cN and the melt drawability in mm/s are determined with the Rheotens test. The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with a lab extruder HAAKE Polylabsystem and a gear pump with cylindrical die (L/D = 6.0/2.0 mm). The gear pump was pre-adjusted to a strand extrusion rate of 5 mm/s, and the melt temperature was set to 200°C. The Göttfert Rheotens tester was operated at constant acceleration of the pulleys (120 mm/s²). The end points of the Rheotens curve (force versus pulley rotary speed) is taken as the melt strength and drawability values.

The tensile modulus in MPa, tensile stress at yield in MPa, tensile strain at yield in %, tensile strength in MPa, tensile strain at tensile strength in %, tensile stress at break in MPa, tensile strain at break in % are determined according to ISO 527.

The melt flow rate (MFR₂) of a propylene polymer is that quantity of polymer in grams which a test apparatus standardized under ISO 1133 extrudes within 10 minutes at a temperature of 230°C under load of 2.16 kg.

### Example

A melt mixture of 49.45 wt% of high melt strength propylene homopolymer (Daploy^{™} WB 130 HMS, Borealis) having a weight average branching index g' of 0.76, 50 wt% talc (grade A7, Luzenac) having an average particle size of 7 µm, 0.2 wt% glycerol monostearate as slide agent, 0.2 wt% calcium stearate as acid scavenger and slide agent and 0.15 wt% of an antioxidant (Irganox^{™} B215FF Ciba Chemicals) was prepared in a co-rotating twin screw extruder (ZSK 40 Werner&Pfleiderer) with ten zones having the following temperature profile:
165°C (first zone) /170/170/180/190/190/200/200/210/210°C (exit zone).

The high melt strength propylene homopolymer was introduced into the first zone, and the talc into the fourth zone, that is at a point where the propylene homopolymer is melted. In the seventh and ninth zone degassing with 1 bar and 100 mbar, respectively, is performed because of, among other things, the hygroscopicity of the talc. The screw speed was 485 rpm. The melt mixture was extruded through a plate with six holes with 4 mm diameter each as die. The extruded mixture was granulated. The extruded mixture had an ash-residue of 51,5 wt% and a melt flow rate (MFR₂) of 2.2. The mechanical properties are shown in table 1 below.

**Table 1**

| **Parameter** | **Unit** | **Value** |
|---|---|---|
| MELT STRENGTH | cN | 21,5 |
| MELT DRAWABILITY | mm/s | 149 |
| TENSILE MODULUS | MPa | 6307,3 |
| TENSILE STRENGTH | MPa | 38,5 |
| TENSILE STRAIN AT TENSILE STRENGTH | % | 1,73 |
| TENSILE STRESS AT BREAK | MPa | 38,2 |
| TENSILE STRAIN AT BREAK | % | 1,95 |

A melt mixture of 97 wt% of the granulated mixture, 1 wt% of Hydrocerol^{™} CF40 (Clariant) as chemical foaming agent and 2 wt% of Hydrocerol^{™} CT516 (Clariant) as cell nucleating agent was prepared in a co-rotating twin-screw extruder (ZE25, Berstorff) with 8 zones, having the following temperature profile:
240°C (first zone) /220/180/180/180/180/180/204°C (exit zone).

The rotating speed of the screws, which were driven by power of 5.3 ampere, was 80 rpm. The exit pressure was 133 bar and the exit melt temperature 204°C. The melt mixture was extruded through a single layer die. The output of foam was 3.88 kg/h. The take-off speed of the extruded single layer foam was 2.8 m/min. Due to this take-off speed the foam is stretched in machine direction. To cool the foam immediately after the die two chill rolls with a temperature of 40°C each and an air rakel between the die and the chill rolls are provided.

The foam density is 522 kg/m³.

### Comparative Example

The above example was repeated by preparing a melt mixture of 97 wt% of the same high melt propylene homopolymer (Daploy^{™} WB 130 HMS, Borealis), 1 wt% of the same foaming agent and 2 wt% of the same cell nucleating agent in the same extruder as in the above example. The temperature profile of the 8 zones of the extruder was:
240°C (first zone) /220/180/180/180/180/180/194°C (exit zone).

The rotating speed of the screws which were driven with a power of 3.9 ampere was 40 rpm. The exit pressure at the exit melt temperature of 194°C was 87 bar. The output of the extruder was 3.5 kg/h. The melt mixture was extruded through the same single layer die as in the above example. The take-off speed of the extruded single layer foam was 1.7 m/min. The chill rolls and their temperature and the air rakel were the same as in the above example.

The foam density is 484 kg/m³.

Of the foam of the example (IF) and the foam of the comparative example (CF) samples were cut in squares of approximately 5 x 5 cm, so that the edges of the foamed sheet were cut off, i.e. the samples form only the middle parts.

The liquid absorption properties were measured by immersion of three samples into the test liquids. Two test liquids were used, i.e. liquid A: water and liquid B: water plus 5 wt% of a commercial detergent. The foam according to the invention (IF) was immediately covered by bubbles when immersed into water. This already indicates rapid liquid uptake.

The liquid absorption capacity of each sample was measured by determining the weight of the sample before immersion into the liquid (initial mass (g)) and after immersion into the liquid (final mass (g)). As seen from table 2 below, the foam according to the invention (IF) is capable of taking up between 7% and 12% of liquid, whereas the foam according to the comparative example (CF) takes up only 1% of water and only 2% of water with 5% detergent.

**Table 2**

| **Sample** | **Liquid** | **Initial mass** [g] | **Final mass** [g] | **Liquid Absorption** [g/g] |
|---|---|---|---|---|
| CF | A | 1,9278 | 1,9549 | 1 % |
| CF | A | 1,9057 | 1,9266 | 1% |
| CF | A | 1,9470 | 1,9612 | 1% |
| IF | A | 4,1240 | 4,5453 | 10% |
| IF | A | 3,8890 | 4,1665 | 7% |
| IF | A | 3,3459 | 3,7585 | 12% |
| CF | B | 1,2265 | 1,2571 | 2% |
| CF | B | 1,2603 | 1,2865 | 2% |
| CF | B | 1,2706 | 1,2949 | 2% |
| IF | B | 3,6564 | 3,9814 | 9% |
| IF | B | 3,5180 | 3,8090 | 8% |
| IF | B | 3,1429 | 3,4663 | 10% |

## Claims

1. A polyolefin comprising 30 to 94 wt% of a foamable polyolefin and 6 to 70 wt% preferably at least 20 wt% of a particulate solid material, and
wherein the foamable polyolefin has a weight average branching index g' < 0.9.

2. A polyolefin foam according to anyone of the preceding claims wherein the foamable polyolefin is polypropylene.

3. A polyolefin foam according to anyone of the preceding claims, the particulate solid material having an average particle size between 1 µm and 50 µm.

4. A polyolefin foam according to anyone of the preceding claims, the particulate solid material being talc.

5. A polyolefin foam according to anyone of the preceding claims having a density of 20 to 700 kg/m³.

6. A polyolefin foam according to anyone of the preceding claims, having a liquid absorption capacity of more than 5% (g/g).

7. A process for making a polyolefin foam according to anyone of the preceding claims comprising the steps of:
a) preparing a mixture of the polyolefin and the particulate solid material by melt mixing the polyolefin and the particulate solid material and
b) adding a blowing agent to the mixture of the polyolefin and the particulate solid material to foam the mixture.

8. A process according to claim 7, wherein step a) comprises feeding the polyolefin into an extruder, melting the polyolefin in the extruder, adding the particulate solid material to the melted polyolefin, and mixing the melted polyolefin and the particulate solid material in the extruder.

9. A process according to claim 7 or 8, wherein step b) comprises mixing a mixture of the melted polyolefin and the particulate solid material prepared by step a) and a blowing agent in an extruder at a pressure sufficient to prevent foaming, extruding the mixture of the melted polyolefin, the particulate solid material and the blowing agent through a die, whereby the blowing agent expands due to a pressure drop to atmospheric pressure, causing formation of the foam and cooling the foam immediately after the die.

10. A process according to anyone of the claims 8 to 9, wherein the melt mixed mixture of the polyolefin and the particulate solid material has one or more of the following properties
melt strength 5 to 100 cN,
melt drawability 100 to 500 mm/s,
tensile modulus 100 to 10000 Mpa.

11. A process according to anyone of the claims 7 to 10, wherein the foam is extruded as a film, foil, sheet, profile, strand or particle foam.

12. Use of the foam according to anyone of claims 1 to 6 for articles absorbing liquid.

13. Use of the foam according to anyone of claims 1 to 6 for permeable films, foils, sheet, profile, strand or particle foam.

14. Use of the foam according to anyone of claims 1 to 6 for acoustic insulations.

## Patentansprüche

1. Polyolefin, umfassend 30 bis 94 Gew.-% eines schäumbaren Polyolefins und 6 bis 70 Gew.-%, vorzugsweise mindestens 20 Gew.-% eines partikelförmigen Feststoffmaterials,
wobei das schäumbare Polyolefin einen massegemittelten Verzweigungsindex g' von < 0,9 aufweist.

2. Polyolefinschaum nach einem der vorstehenden Ansprüche, wobei das schäumbare Polyolefin Polypropylen ist.

3. Polyolefinschaum nach einem der vorstehenden Ansprüche, wobei das partikelförmige Feststoffmaterial eine mittlere Partikelgröße von 1 bis 50 µm aufweist.

4. Polyolefinschaum nach einem der vorstehenden Ansprüche, wobei das partikelförmige Feststoffmaterial Talkum ist.

5. Polyolefinschaum nach einem der vorstehenden Ansprüche, der eine Dichte von 20 bis 700 kg/m³ aufweist.

6. Polyolefinschaum nach einem der vorstehenden Ansprüche, der eine Flüssigkeitsaufnahmefähigkeit von mehr als 5 % (g/g) aufweist.

7. Verfahren zur Herstellung eines Polyolefinschaums nach einem der vorstehenden Ansprüche, das die folgenden Schritte aufweist:
a) Herstellen eines Gemischs aus dem Polyolefin und dem partikelförmigen Feststoffmaterial durch Mischen des Polyolefins und des partikelförmigen Feststoffmaterials in der Schmelze und
b) Zugeben eines Treibmittels zu dem Gemisch aus dem Polyolefin und dem partikelförmigen Feststoffmaterial, so daß das Gemisch schäumt.

8. Verfahren nach Anspruch 7, wobei der Schritt a) das Einführen des Polyolefins in einen Extruder, das Schmelzen des Polyolefins in dem Extruder, das Zugeben des partikelförmigen Feststoffmaterials zum geschmolzenen Polyolefin und das Mischen des geschmolzenen Polyolefins und des partikelförmigen Feststoffmaterials im Extruder umfaßt.

9. Verfahren nach Anspruch 7 oder 8, wobei der Schritt b) das Mischen eines Gemischs aus dem geschmolzenen Polyolefin und dem partikelförmigen Feststoffmaterial, das im Schritt a) erzeugt worden ist, und eines Treibmittels in einem Extruder bei einem ausreichenden Druck, so daß das Schäumen verhindert wird, das Extrudieren des Gemischs aus dem geschmolzenen Polyolefin, dem partikelförmigen Feststoffmaterial und dem Treibmittel durch eine Düse, wodurch sich das Treibmittel aufgrund des Druckabfalls auf Atmosphärendruck ausdehnt, womit es zur Schaumbildung kommt, und das Abkühlen des Schaums unmittelbar nach der Düse umfaßt.

10. Verfahren nach einem der Ansprüche 8 bis 9 , wobei das in der Schmelze gemischte Gemisch aus dem Polyolefin und dem partikelförmigen Feststoffmaterial eine oder mehrere der folgenden Eigenschaften aufweist:
Schmelzfestigkeit 5 bis 100 cN,
Ziehfähigkeit der Schmelze 100 bis 500 mm/s,
Zugmodul 100 bis 10.000 MPa.

11. Verfahren nach einem der Ansprüche 7 bis 10, wobei der Schaum als Film, Folie, dünne Lage, Profil, Strang oder Partikelschaum extrudiert wird.

12. Verwendung des Schaums nach einem der Ansprüche 1 bis 6 für Flüssigkeit aufnehmende Gegenstände.

13. Verwendung des Schaums nach einem der Ansprüche 1 bis 6 für durchlässige Filme, Folien, eine dünne durchlässige Lage, ein durchlässiges Profil, einen durchlässigen Strang oder einen durchlässigen Partikelschaum.

14. Verwendung des Schaums nach einem der Ansprüche 1 bis 6 für Schallisolationen.

## Revendications

1. Polyoléfine comprenant de 30 à 94 % en poids d'une polyoléfine expansible et de 6 à 70 % en poids, de préférence au moins 20 % en poids, d'un matériau solide particulaire, et
dans laquelle la polyoléfine expansible possède un indice moyen de ramification en poids g' inférieur à 0,9.

2. Mousse de polyoléfine selon l'une quelconque des revendications précédentes, dans laquelle la polyoléfine expansible est du polypropylène.

3. Mousse de polyoléfine selon l'une quelconque des revendications précédentes, le matériau solide particulaire possédant une granulométrie moyenne comprise entre 1 µm et 50 µm.

4. Mousse de polyoléfine selon l'une quelconque des revendications précédentes, le matériau solide particulaire étant du talc.

5. Mousse de polyoléfine selon l'une quelconque des revendications précédentes, possédant une densité allant de 20 à 700 kg/m³.

6. Mousse de polyoléfine selon l'une quelconque des revendications précédentes, possédant une capacité d'absorption de liquide supérieure à 5 % (g/g).

7. Procédé de fabrication d'une mousse de polyoléfine selon l'une quelconque des revendications précédentes, comprenant les étapes consistant à :
a) préparer un mélange de la polyoléfine et du matériau solide particulaire en mélangeant à l'état de fusion la polyoléfine et le matériau solide particulaire et
b) ajouter un agent de gonflement au mélange de la polyoléfine et du matériau solide particulaire afin de faire mousser le mélange.

8. Procédé selon la revendication 7, dans lequel l'étape a) comprend les étapes consistant à mettre la polyoléfine dans une extrudeuse, à faire fondre la polyoléfine dans l'extrudeuse, à ajouter le matériau solide particulaire à la polyoléfine fondue, et à mélanger la polyoléfine fondue et le matériau solide particulaire dans l'extrudeuse.

9. Procédé selon la revendication 7 ou 8, dans lequel l'étape b) comprend les étapes consistant à mélanger le mélange de la polyoléfine fondue et du matériau solide particulaire préparé au cours de l'étape a) et un agent de gonflement dans une extrudeuse à une pression suffisante pour empêcher la formation de mousse, à extruder le mélange de la polyoléfine fondue, du matériau solide particulaire et de l'agent de gonflement à travers une filière, moyennant quoi l'agent de gonflement se dilate du fait d'une chute de pression à la pression atmosphérique, ce qui provoque la formation de la mousse, et à faire refroidir la mousse juste après sa sortie de la filière.

10. Procédé selon l'une quelconque des revendications 8 à 9, dans lequel le mélange mélangé à l'état de fusion de la polyoléfine et du matériau solide particulaire possède une ou plusieurs des propriétés suivantes :
une résistance à la fusion allant de 5 à 100 cN
une aptitude à l'étirage à l'état fondu allant de 100 à 500 mm/s,
un module d'élasticité en traction allant de 100 à 10 000 Mpa.

11. Procédé selon l'une quelconque des revendications 7 à 10, dans lequel la mousse est extrudée sous forme de film, de feuille coulée, de feuille, de profilé, de fils ou de mousse particulaire.

12. Utilisation de la mousse selon l'une quelconque des revendications 1 à 6 pour des articles qui absorbent les liquides.

13. Utilisation de la mousse selon l'une quelconque des revendications 1 à 6 pour des films, des feuilles coulées, des feuilles, des profilés, des fils ou des mousses particulaires perméables.

14. Utilisation de la mousse selon l'une quelconque des revendications 1 à 6 pour l'isolation phonique.
